(19) Europäisches Patentamt
European Patent Office
Office européen des brevets

(11) **EP 0 786 200 B1**

(12) **EUROPÄISCHE PATENTSCHRIFT**

(45) Veröffentlichungstag und Bekanntmachung des Hinweises auf die Patenterteilung:
**21.05.2003   Patentblatt 2003/21**

(51) Int Cl.⁷: **A01B 63/111**, A01D 41/14, A01B 63/114

(21) Anmeldenummer: **96120123.3**

(22) Anmeldetag: **14.12.1996**

(54) **Vorrichtung und Verfahren zur Regelung der Lage einer Bearbeitungseinheit einer landwirtschaftlichen Maschine**

Agricultural machine working unit position regulation device and method

Dispositif et méthode de régulation de position d'une unité de travail d'une machine agricole

(84) Benannte Vertragsstaaten:
**BE DE FR GB IT**

(30) Priorität: **27.01.1996  DE 19602893**

(43) Veröffentlichungstag der Anmeldung:
**30.07.1997   Patentblatt 1997/31**

(73) Patentinhaber: **ROBERT BOSCH GMBH**
**70442 Stuttgart (DE)**

(72) Erfinder: **Maichle, Josef**
**71717 Beilstein (DE)**

(56) Entgegenhaltungen:
DE-A- 4 406 892     US-A- 4 942 724
US-A- 5 463 854     US-A- 5 473 870

• F.W. HÖFER: "Elektrohydraulisches Regelsystem für Landmaschinen" ÖLHYDRALIK UND PNEUMATIK 16, Nr. 11, 1972, XP002130720

## Beschreibung

Stand der Technik

Die Erfindung betrifft ein Verfahren und eine Vorrichtung zur Regelung der Lage einer Bearbeitungseinheit einer landwirtschaftlichen Maschine nach der Gattung des Hauptanspruchs (siehe US-A-5463854).

Es ist bereits eine hydraulische Hubeinrichtung für Mähdrescher aus der DE-PS 15 82 161 bekannt, bei der die Lage der Bearbeitungseinheit relativ zum Mähdrescher und die in der hydraulischen Hubeinrichtung auftretenden Drücke meßtechnisch erfaßt werden. Über eine Summenregelung werden diese beiden Meßsignale kombiniert und ein Regelausgangssignal unter Berücksichtigung der Abweichung zu einem eingestellten Sollwert erzeugt.

Weiterhin ist aus der DE 44 06 892 A1 eine Mähtischregelung bekannt, bei der zusätzlich ein Ultraschall-Bodenabstandssensor vorhanden ist. Mit dieser berührungsfreien Bodenabstandsmessung kann eine Nachführung des Mähtisches zur Erreichung einer konstanten Schnitthöhe des Mähgutes erfolgen. Hierbei werden in jeweils vorgegebenen Grenzen das mit einem Lagesensor und mit dem Bodenabstandssensor erfaßte Signal entweder einzeln oder kombiniert in einem Regelgerät ausgewertet.

Auch aus der DE-OS 32 40 791 ist bekannt, zusätzlich zur Messung des Auflagedrucks eines Einzugsorgans einer Erntemaschine mittels eines mechanischen Tastorgans den Bodenabstand des Einzugsorgans zu messen. Jedoch werden bei dieser bekannten Einrichtung beide Größen separat eingestellt und auch ausgewertet, was beispielsweise bei großen Unebenheiten des Bodens, bzw. bei großer Bearbeitungsgeschwindigkeit zu Ungenauigkeiten in der Bearbeitung führen kann.

Bei den beschriebenen Bodenabstandsregelungen soll der Bodenabstand der Bearbeitungseinheit (z.B. ein Mähtisch) möglichst genau geregelt werden, z. B. für Stoppelhöhen des Mähgutes von 10 cm oder kleiner. Die Bearbeitungseinheiten können dabei eine Schnittbreite von mehr als 7 m aufweisen. Die Bodenabstandssensoren befinden sich jedoch in der Regel nur an den seitlichen Enden der Bearbeitungseinheit. Hierbei ist es nicht auszuschließen, daß die Bearbeitungseinheit trotz Abstandsregelung unerwünschten Bodenkontakt bekommt. Dies kann vorkommen, wenn beispielsweise in der Mitte der Bearbeitungseinheit eine Erderhebung ist oder ein Stein liegt.

Es kommt auch vor, daß eine Fehlmessung dadurch erfolgt, daß einer der Abstandssensoren in eine Fahrspur, die durch frühere Bearbeitungen des Akkerbodens entstanden ist, hineinmißt und dadurch eine Schieflage der Bearbeitungseinheit auftritt. Eine Vermeidung von Bodenkontakt durch die Anbringung von mehreren Abstandssensoren scheidet in der Regel dadurch aus, daß hierfür kein Platz ist oder die Gefahr von Beschädigungen zu groß ist.

Bei den bekannten reinen Abstandsregelungen trat bisher auch das Problem auf, daß im Falle eines Bodenkontaktes die Bearbeitungseinheit mit seiner gesamten Auflagekraft auf dem Boden auflag. Dies führt zu einer großen Reibung und zu einem erhöhten Verschleiß sowie gegebenenfalls auch zu einem vollständigen Stillstand der landwirtschaftlichen Maschine.

Eine reine Auflagedruckregelung wird in der Regel dann angewandt, wenn beispielsweise das zu bearbeitende Gut nahe auf dem Boden liegt und der Mähtisch als Bearbeitungseinheit so auf dem Boden geführt werden soll, daß die verbleibende Auflagekraft des Mähtisches auf dem Boden möglichst gering sein soll. Ein typischer Mähtisch wiegt ca. 1800 kg; hierbei soll während der Fahrt nur eine Restkraft von 100 kg oder kleiner auf dem Boden aufliegen. Bei einem angehobenen Mähtisch wird beispielsweise in den Hubzylindern eines Steuerelements ein Druck von 100 bar gemessen, was hier dem Gewicht von ca. 1800 kg entspricht.

Problematisch ist die reine Auflagedruckregelung durch die hohe Reibungshysterese der Hubzylinder, wodurch der gemessene Druck als Regelgröße nur bedingt heranzuziehen ist. Eine Vermeidung dieser Hysterese durch eine dem Auflagedruck proportionale Regelgröße ist in der Regel zu aufwendig und zu teuer. Die normale Zylinderdruckhysterese beträgt beispielsweise etwa 8 bar entsprechend einem Gewicht von ca. 144 kg. Da somit dem elektronischen Druckregler in der Maschine nur eine mit 8 bar Hysterese belastete Regelgröße zur Verfügung steht, kann die bestmöglichste Regelgenauigkeit hier auch nur bei ca. 144 kg liegen. Wenn dies nicht akzeptiert werden soll, wird in der Praxis der Sollwert für den Auflagedruckregler vermindert, was jedoch dazu führen kann, daß der Mähtisch den gewünschten Bodenkontakt verliert und daß danach der Auflagedruckregler wegen der großen Reibungshysterese nicht mehr eine Absenkung durchführt.

Vorteile der Erfindung

Das erfindungsgemäße Verfahren und die erfindungsgemäße Vorrichtung zur Regelung der Lage einer Bearbeitungseinheit einer landwirtschaftlichen Maschine mit den kennzeichnenden Merkmalen des Anspruchs 1 und 2 und der Weiterbildungen nach den rückbezogenen Ansprüchen ist insofern vorteilhaft, als durch die Einbeziehung einer Korrekturgröße in den Regelkreis ein Umschalten der Regelungsart auch in kritischen Situationen, wie z. B. unerwünschter Bodenkontakt oder auch unerwünschtes Abheben der Bearbeitungseinheit, vermeidbar ist und somit die Stabilität der gesamten Anordnung sichergestellt ist. Diese Verbesserungen sind ohne großen Aufwand in Form von zusätzlicher elektronischer oder hydraulischer Hardware erreichbar.

Beispielsweise wird bei einem unerwünschten Bodenkontakt während einer Abstandsregelung dieser Bodenkontakt akzeptiert, jedoch wird die Auflagekraft der Bearbeitungseinheit so gering wie möglich gehalten. Da das Gewicht der Bearbeitungseinheit bzw. das entsprechende Drucksignal $P_{max}$ des hydraulischen Steuerelements (Hubzylinder) dem elektronischen Regelgerät als Referenzgröße bekannt ist kann die Druckdifferenz zu einem bei Bodenkontakt abfallenden Drucksignal $P_{ist}$ ermittelt werden. Das Signal $P_{max}$ entspricht demjenigen Druck im Hubzylinder, der beispielsweise in einem automatisch ablaufendem Kalibriervorgang bei stillstehender Maschine und nur knapp über den Boden angehobener Bearbeitungseinheit gemessen und nichtflüchtig abgespeichert wird.

Das Drucksignal $P_{ist}$ wird immer kleiner, je stärker die Bearbeitungseinheit auf dem Boden aufliegt und die Gewichtskraft nicht vom Hubzylinder des Steuerelements sondern vom Boden aufgenommen wird. Die so ermittelte Druckdifferenz $P_{diff}$ wird genutzt, um den Sollwert des Abstandsreglers so zu verstellen, daß die Bodenauflagekraft minimal bleibt. Die voreingestellte Regelart der Abstandsregelung wird somit auch bei einem Bodenkontakt nicht verlassen; damit ist ein kontinuierliches Weiterregeln in dieser Regelart ohne Instabilität möglich. Zur Optimierung des Regelkreises wird hier jedoch eine kleine Totzone beim Druckabfall ( ca. 3 bar) zugelassen. Im Ergebnis können z. B. die Bodenauflagekräfte der Bearbeitungseinheit auf unter 200 kg vermindert werden.

Im Falle einer Regelung des Auflagedrucks der Bearbeitungseinheit steht das unerwünschte Abheben der Bearbeitungseinheit vom Boden im Vordergrund. Gemäß der Erfindung wird in vorteilhafter Weise das gemessene Abstandssignal $H_{ist}$ mit einem abgespeicherten Signal $H_{bod}$ als Referenzsignal für den Bodenkontakt verglichen und die ev. auftretende Differenz als Korrekturwert für den eingestellten Drucksollwert $P_{soll}$ herangezogen. Das Signal $H_{bod}$ ist dasjenige Bodenabstandssignal, das von den Abstandssensoren, in der Regel auch hier in einem automatisch ablaufendem Kalibriervorgang, gemessen und abgespeichert wird, wenn die Bearbeitungseinheit auf dem Boden aufliegt. Dabei soll die Maschine still und auf ebenem Boden stehen.

Somit kann durch eine Erhöhung des Auflagedrucksollwerts dem Abheben entgegengewirkt werden ohne die voreingestellte Regelart zu ändern. Damit ist auch bei dieser Regelart ein kontinuierliches Weiterregeln ohne Instabilitäten oder Sprünge gewährleistet. Die Auflagedruckregelung bei minimalem Auflagedruck kann somit trotz hoher Reibungshysterese im Hubzylinder deutlich verbessert werden.

Zeichnung

Ein Ausführungsbeispiel wird der erfindungsgemäßen Vorrichtung wird anhand der Zeichnung erläutert. Es zeigen:

Figur 1 eine Skizze eines Mähdreschers als landwirtschaftliche Maschine mit einem Mähtisch als Bearbeitungseinheit;

Figur 2 ein Blockschaltbild eines Regelkreises für eine Regelung des Bodenabstandes der Bearbeitungseinheit;

Figur 3 ein Blockschaltbild eines Regelkreises für eine Regelung des Auflagedrucks der Bearbeitungseinheit.

Beschreibung des Ausführungsbeispiels

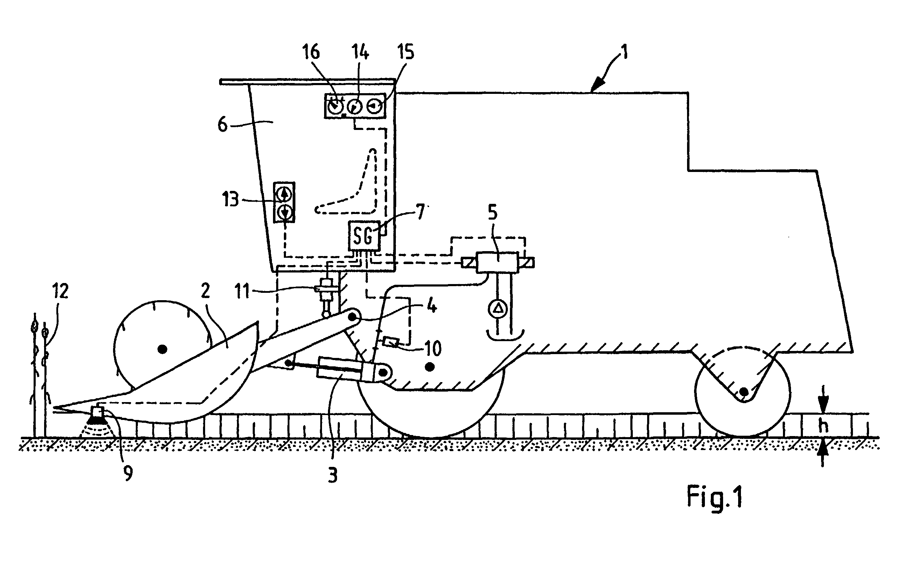

In der Figur 1 ist ein Mähdrescher 1 als landwirtschaftliche Maschine dargestellt, der einen Mähtisch 2 als Bearbeitungseinheit an seiner Vorderfront trägt. Der Mähtisch 2 ist über ein hydraulisches Steuerelement 3, z.B. einen Hubzylinder, in seiner Lage relativ zum Mähdrescher 1 um eine Drehachse 4 verstellbar. Ein Regelventil 5 versorgt das Steuerelement 3 mit der Hydraulikflüssigkeit zum Aufbau des zur geforderten Verstellung des Mähtisches 2 notwendigen Drucks. In einem Fahrerhaus 6 ist ein elektronisches Regelgerät 7 schematisch angedeutet, welches als Ausgangsgröße das Stellsignal für das Regelventil 5 im Steuerelement 3 erzeugt. Als Istgrößen werden dem Regelgerät 7 das Ausgangssignal eines Ultraschallsensors 9 ( wobei ein zweiter Ultraschallsensor am anderen Ende des Mähtisches 2 nicht sichtbar ist), das Ausgangssignal eines Drucksensors 10 und das Ausgangssignal eines, beispielsweise induktiven, Lagesensors 11 zugeführt.

Der Ultraschallsensor 9 erfaßt hierbei den Bodenabstand des Mähtisches 2, der mit der Stoppelhöhe h eines abgemähten Erntegutes 12 direkt korreliert; der Lagesensor 11 mißt die Lage des Mähtisches 2 relativ zum Mähdrescher 1, wobei diese Lage aufgrund von konstruktiven Gegebenheiten des Mähdreschers und/ oder Bodenunebenheiten nicht direkt mit dem Bodenabstand korreliert. Der Drucksensor 10 erfaßt den Auflagedruck des Mähtisches 2 auf den Boden in der Ruhelage bzw. auf die Halterung an der Maschine.

Als Sollgrößen stehen dem Regelgerät 7 die Ausgangssignale eines Bedientasters 13 zur zwangsweisen Auf- und Niederbewegung des Mähtisches 2, eines Sollwertstellers 14 für die Einstellung der gewünschten Stoppelhöhe h und eines Sollwertstellers 15 für einen gewünschten Auflagedruck des Mähtisches 2 zur Verfügung. Darüber hinaus ist noch ein Betriebsartenwahlschalter 16 vorhanden, mit dem verschiedene Regelungsarten vorgewählt werden können.

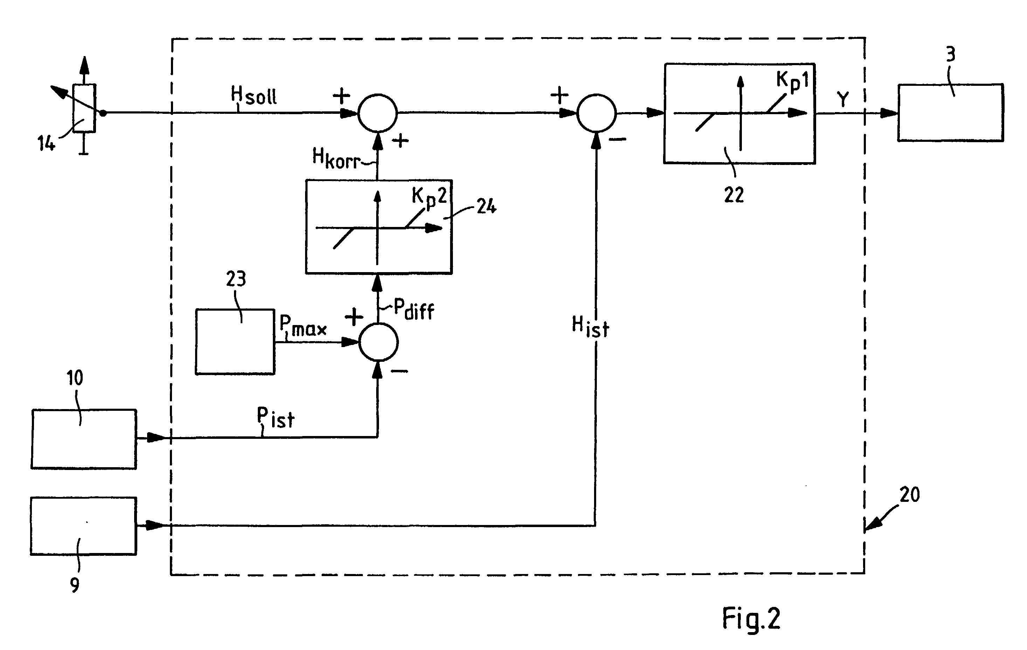

Das Blockschaltbild nach Figur 2 zeigt einen Regelkreis 20 zur Regelung des Bodenabstandes des Mähtisches 2, wobei der gewünschte Abstand an dem Sollwertpotentiometer 14 eingestellt wird. Eine Stellgröße Y für den Hubzylinder als hydraulisches Steuerelement 3 wird dabei in üblicher Weise aus der Differenz zwischen dem Abstandssollwert $H_{soll}$ und dem mit dem Abstandssensor 9 gemessenen Abstandsistwert $H_{ist}$ gebildet und in einem Proportionalglied 22 mit dem Verstärkungsfaktor $K_p1$ verstärkt.

$$Y = (H_{soll} - H_{ist}) * K_p1 \qquad (1)$$

Ein zusätzliches Druckdifferenzsignal $P_{diff}$ wird aus der Druckdifferenz zwischen dem Ausgangssignal $P_{ist}$ des Drucksensors 10 und dem maximalen Druck $P_{max}$ des Hubzylinders 3 ohne jeden Bodenkontakt des Mähtisches 2 ermittelt. Das Signal $P_{max}$ ist durch das Gewicht des Mähtisches 2 bekannt und in einem nichtflüchtigen Speicher 23 hinterlegt.

$$P_{diff} = (P_{max} - P_{ist}) \qquad (2)$$

Ein Korrektursignal $H_{korr}$ ergibt sich aus der Verstärkung mit einem Verstärkungsfaktor $K_p2$ in einem Proportionalglied 24 unter Einbeziehung einer Totzone (ca. 3 bar) für einen tolerierten Druckabfall im Hubzylinder 3.

$$H_{korr} = (P_{diff} - \text{Totzone}) * K_p2 \qquad (3)$$

Die nunmehr verbesserte Stellgröße Y kann somit nach der unten aufgeführten Beziehung gebildet werden.

$$Y = ((H_{soll} + H_{korr}) - H_{ist}) * K_p1 \qquad (4).$$

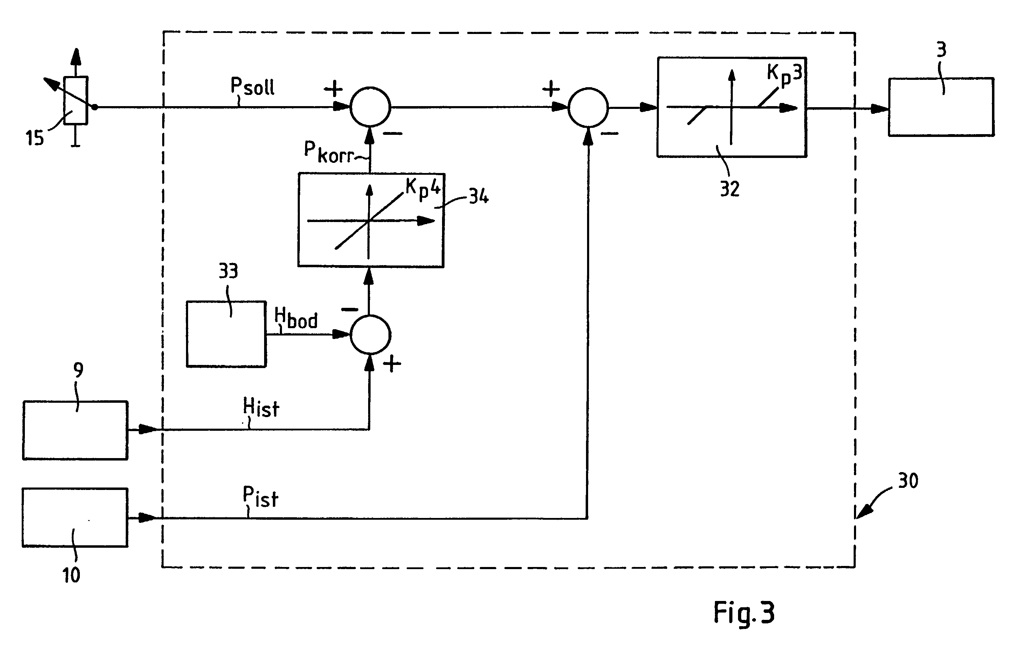

In vergleichbarer Weise wie anhand der Figur 2 erläutert ist eine Auflagedruckregelung in einem Regelkreis 30 nach Figur 3 durchführbar, wobei auch hier die herkömmliche Regelung der Steuergröße Y im Prinzip gemäß der folgenden Beziehung erfolgt.

$$Y = (P_{soll} - P_{ist}) * K_p3 \qquad (5)$$

Ähnlich wie oben erwähnt wird auch hier ein Drucksollwert $P_{soll}$ an dem Sollwertpotentiometer 15 eingestellt und die Differenz zu dem Druckistwert $P_{ist}$ in einem Proportionalglied 32 mit einem Verstärkungsfaktor $K_p3$ verstärkt.

Nach der Figur 3 ist die Auflagedruckregelung durch die Beaufschlagung mit einem weiteren Korrekturwert $P_{korr}$ verbessert.

$$P_{korr} = (H_{ist} - H_{bod}) * K_p4 \qquad (6)$$

Die Differenz aus dem mit dem Abstandssensor 9 gemessenen Bodenabstand $H_{ist}$ und einem in einem nichtflüchtigen Speicher 33 hinterlegten Bodenabstand $H_{bod}$, bei Auflage des Mähtisches 2 auf dem Boden, wird hierbei in einem Proportionalglied 34 mit einem Verstärkungsfaktor $K_p4$ verstärkt.

Unter Berücksichtigung dieses Korrekturwertes $P_{korr}$ ergibt sich eine verbesserte Regelung der Stellgröße am Hubzylinder 3 nach der folgenden Beziehung. .

$$Y = ((P_{soll} - P_{korr}) - P_{ist}) * K_p3 \qquad (7).$$

Sowohl die oben beschriebene Bodenabstandsregelung als auch die Auflagedruckregelung des Mähtisches 2 als Bearbeitungseinheit gewährleistet somit eine jeweils kontinuierliche Regelung ohne Instabilitäten des Mähtisches 2 als auch der gesamten landwirtschaftlichen Maschine 1, wobei auch extreme Lagen bei der Anwendung der Maschine berücksichtigt sind.

**Patentansprüche**

1.  Verfahren zur Regelung der Lage einer Bearbeitungseinheit einer landwirtschaftlichen Maschine, wobei die Maschine

    -   einen Abstandssensor (9), der den Abstand der Bearbeitungseinheit (2) vom Boden erfaßt, sowie

    -   einen Drucksensor (10) aufweist, der die in einem vorzugsweise hydraulischen oder pneumatischen Steuerelement (3) für die Lage der Bearbeitungseinheit (2) auftretenden Drücke mißt und die Maschine

    -   ein Regelgerät (7) enthält, das unter Vorgabe mindestens eines Sollwerts und unter Auswertung der Sensorausgangssignale die Steuerelemente (3) zur Einstellung des Bodenabstands und/oder des Auflagedrucks betätigt, bei dem

    -   Signalwerte für den maximalen Zylinderdruck ($P_{max}$)des Steuerelements (3) bei angehobener Bearbeitungseinheit und/oder den Bodenabstand ($H_{bod}$)bei einer waagerechten Auflage der Bearbeitungseinheit (2) auf dem Boden jeweils in einem nichtflüchtigen Speicher (23,33) im Regelgerät (7) hinterlegt werden und bei dem

    -   aus diesen Signalen ($P_{max}$,$H_{bod}$) und den gemessenen Istsignalen ($P_{ist}$,$H_{ist}$) Korrekturwerte ($P_{korr}$,$H_{korr}$) für das jeweilige Sollwertsignal ($P_{soll}$,$H_{soll}$) abgeleitet werden, **dadurch ge-**

**kennzeichnet, dass**

- das Regelgerät (7) einen proportionalen Regelkreis (20) enthält, der eine Stellgröße (Y) für das Steuerelement (3) nach folgender Beziehung ermittelt:

$$Y = ( H_{soll} - H_{ist} ) * K_p1 \qquad (1),$$

($H_{soll}$ = Abstandssollwert,

$H_{ist}$ = Abstandsistwert,

$K_p1$ = proportionaler Verstärkungsfaktor),

- daß ein Differenzdruck ($P_{diff}$) zwischen dem maximalen Druck ($P_{dmax}$) im Steuerelement (3) ohne Bodenauflage der Bearbeitungseinheit (2) und dem gemessenen Druck ($P_{ist}$) wie folgt errechnet wird:

$$P_{diff} = (P_{max} - P_{ist}) \qquad (2),$$

- daß der Korrekturwert ($H_{korr}$) für den Sollwert ($H_{soll}$) des Bodenabstands der Bearbeitungseinheit (2) nach folgender Beziehung ermittelt wird:

$$H_{korr} = (P_{diff} - Totzone) * K_P2 \qquad (3),$$

(Totzone = tolerierter geringer Druckabfall,
$K_P2$ = proportionaler Verstärkungsfaktor),

- und daß die Stellgröße (Y) nach folgender Beziehung errechnet wird:

$$Y = ((H_{soll} + H_{korr}) - H_{ist}) * K_p1 \qquad (4).$$

2. Verfahren zur Regelung der Lage einer Bearbeitungseinheit einer landwirtschaftlichen Maschine, wobei die Maschine

- einen Abstandssensor (9), der den Abstand der Bearbeitungseinheit (2) vom Boden erfaßt, sowie

- einen Drucksensor (10) aufweist, der die in einem vorzugsweise hydraulischen oder pneumatischen Steuerelement (3) für die Lage der Bearbeitungseinheit (2) auftretenden Drücke mißt und die Maschine

- ein Regelgerät (7) enthält, das unter Vorgabe mindestens eines Sollwerts und unter Auswertung der Sensorausgangssignale die Steuerelemente (3) zur Einstellung des Bodenabstands und/oder des Auflagedrucks betätigt, bei dem

- Signalwerte für den maximalen Zylinderdruck ($P_{max}$) des Steuerelements (3) bei angehobener Bearbeitungseinheit und/oder den Bodenabstand ($H_{bod}$) bei einer waagerechten Auflage der Bearbeitungseinheit (2) auf dem Boden jeweils in einem nichtflüchtigen Speicher (23,33) im Regelgerät (7) hinterlegt werden und bei dem

- aus diesen Signalen ($P_{max}$,$H_{bod}$) und den gemessenen Istsignalen ($P_{ist}$,$H_{ist}$) Korrekturwerte ($P_{korr}$,$H_{korr}$) für das jeweilige Sollwertsignal ($P_{soll}$,$H_{soll}$) abgeleitet werden, **dadurch gekennzeichnet, dass**

- das Regelgerät (7) einen proportionalen Regelkreis (20) enthält, der eine Stellgröße (Y) für das Steuerelement (3) nach folgender Beziehung ermittelt:

$$Y = ( P_{soll} - P_{ist} ) * K_p3 \qquad (5),$$

($P_{soll}$ = Drucksollwert,

$P_{ist}$ = Druckistwert,

$K_p3$ = proportionaler Verstärkungsfaktor),

- daß der Korrekturwert ($P_{korr}$) für den Sollwert ($P_{soll}$) des Drucks in dem Steuerelement (3) nach folgender Beziehung ermittelt wird:

$$P_{korr} = (H_{ist} - H_{bod}) * K_P4 \qquad (6),$$

($H_{ist}$ = gemessener Bodenabstand,

$H_{bod}$ = gespeicherter Bodenabstand bei Bodenauflage,

$K_P4$ = proportionaler Verstärkungsfaktor),

- und daß die Stellgröße (Y) nach folgender Beziehung errechnet wird:

$$Y = ((P_{soll} - P_{korr}) - P_{ist}) * K_p3 \qquad (7).$$

3. Vorrichtung zur Ausführung des Verfahrens nach einem der vorhergehenden Ansprüche, **dadurch**

**gekennzeichnet, daß**

- das Regelgerät (7) einen Betriebsartenwahlschalter (16) aufweist, mit dem das Steuerelement(3) entweder über eine Abstandsregelung oder eine Auflagedruckregelung der Bearbeitungseinheit (2) oder eine Kombination von beiden steuerbar ist.

4. Vorrichtung zur Ausführung des Verfahrens nach einem der vorhergehenden Ansprüche, **dadurch gekennzeichnet, daß**

- die landwirtschaftliche Maschine (1) ein Mähdrescher ist, dessen Mähtisch als Bearbeitungseinheit (2) über einen hydraulischen Hubzylinder als Steuerelement (3) in seiner Höhe verstellbar ist.

5. Vorrichtung zur Ausführung des Verfahrens nach einem der vorhergehenden Ansprüche, **dadurch gekennzeichnet, daß**

- der mindestens eine Abstandssensor (9) ein Ultraschallsensor ist.

6. Vorrichtung zur Ausführung des Verfahrens nach einem der Ansprüche 1 bis 4, **dadurch gekennzeichnet, daß**

- der mindestens eine Abstandssensor (9) ein mechanisches Tastorgan ist.

**Claims**

1. Method for regulating the position of a processing unit of an agricultural machine, the machine

- having a distance sensor (9) which senses the distance of the processing unit (2) from the ground, and
- having a pressure sensor (10) which measures the pressures occurring in a preferably hydraulic or pneumatic control element (3) for the position of the processing unit (2), and the machine
- including a regulation device (7) which, given the stipulation of at least one desired value and the evaluation of the sensor output signals, actuates the control elements (3) in order to set the ground distance and/or the support pressure, in the case of which
- signal values for the maximum cylinder pressure ($P_{max}$) of the control element (3) given a raised processing unit, and/or for the ground distance ($H_{Bod}$) given a horizontal support of the processing unit (2) on the ground, are stored respectively in a non-volatile memory (23, 33) in the regulation device (7), and in the case of which

- correction values ($P_{korr}, H_{korr}$) for the respective desired value signal ($P_{soll}, H_{soll}$) are derived from these signals ($P_{max}, H_{bod}$) and the measured actual signals ($P_{ist}, H_{ist}$), **characterized**
- **in that** the regulation device (7) includes a proportional control loop (20) which determines a manipulating variable (Y) for the control element (3) according to the following relationship:

$$Y = (H_{soll} - H_{ist}) * K_p 1 \qquad (1),$$

| $H_{soll}$ = | desired distance value, |
|---|---|
| $H_{ist}$ = | actual distance value, |
| $K_p 1$ = | proportional gain), |

- **in that** a differential pressure ($P_{diff}$) between the maximum pressure ($P_{dmax}$) in the control element (3) without ground support of the processing unit (2) and the measured pressure ($P_{ist}$) is calculated as follows:

$$P_{diff} = (P_{max} - P_{ist}) \qquad (2),$$

- **in that** the correction value ($H_{korr}$) for the desired value ($H_{soll}$) of the ground distance of the processing unit (2) is determined according to the following relationship:

$$H_{korr} = (P_{diff} - \text{dead zone}) * K_p 2 \qquad (3),$$

(dead zone = tolerated slight pressure drop, $K_p 2$ = proportional gain),

- and **in that** the manipulating variable (Y) is calculated according to the following relationship:

$$Y = ((H_{soll} + H_{korr}) - H_{ist} * K_p 1 \qquad (4).$$

2. Method for regulating the position of a processing unit of an agricultural machine, the machine

- having a distance sensor (9) which senses the distance of the processing unit (2) from the ground, and
- having a pressure sensor (10) which measures the pressures occurring in a preferably hydraulic or pneumatic control element (3) for the position of the processing unit (2), and the machine
- including a regulation device (7) which, given the stipulation of at least one desired value and the evaluation of the sensor output signals, actuates the control elements (3) in order to set the ground distance and/or the support pressure, in the case of which

- signal values for the maximum cylinder pressure ($P_{max}$) of the control element (3) given a raised processing unit, and/or for the ground distance ($H_{Bod}$) given a horizontal support of the processing unit (2) on the ground, are stored respectively in a non-volatile memory (23, 33) in the regulation device (7), and in the case of which

- correction values ($P_{korr}$, $H_{korr}$) for the respective desired value signal ($P_{soll}$, $H_{soll}$) are derived from these signals ($P_{max}$, $H_{bod}$) and the measured actual signals ($P_{ist}$, $H_{ist}$), **characterized**

- **in that** the regulation device (7) includes a proportional control loop (20) which determines a manipulating variable (Y) for the control element (3) according to the following relationship:

$$Y = (P_{soll} - P_{ist}) * K_p3 \qquad (5),$$

($P_{soll}$ = desired pressure value,
$P_{ist}$ = actual pressure value,
$K_p3$ = proportional gain),

- **in that** the correction value ($P_{korr}$) is determined for the desired value ($P_{soll}$) of the pressure in the control element (3) according to the following relationship:

$$P_{korr} = (H_{ist} - H_{bod}) * K_p4 \qquad (6),$$

($H_{ist}$ = measured ground distance,
$H_{bod}$ = stored ground distance given ground support,
$K_p4$ = proportional gain),

- and in that the manipulating variable (Y) is calculated according to the following relationship:

$$Y = ((P_{soll} - P_{korr}) - P_{ist}) * K_p3 \qquad (7).$$

3. Device for carrying out the method according to one of the preceding claims, **characterized**

- **in that** the regulation device (7) has an operating mode selector switch (16) with the aid of which the control element (3) can be controlled via either distance regulation or support pressure regulation of the processing unit (2) or a combination of the two.

4. Device for carrying out the method according to one of the preceding claims, **characterized**

- **in that** the agricultural machine (1) is a combine harvester the height of whose outer deck table as processing unit (2) can be adjusted via a hydraulic lift cylinder as control element (3).

5. Device for carrying out the method according to one of the preceding claims, **characterized**

- **in that** the at least one distance sensor (9) is an ultrasound sensor.

6. Device for carrying out the method according to one of Claims 1 to 4, **characterized**

- **in that** the at least one distance sensor (9) is a mechanical probe.

**Revendications**

1. Procédé de régulation de la position d'un équipement d'une machine agricole comprenant :

- un capteur de distance (9) qui détecte la distance entre l'équipement (2) et le sol,
- un capteur de pression (10) qui mesure la pression produite dans un élément de commande (3) notamment hydraulique ou pneumatique pour la position de l'équipement (2), et
- un appareil de régulation (7) qui en prédéterminant au moins une valeur de consigne et en exploitant les signaux de sortie de capteur, actionne les éléments de commande (3) pour régler la distance au sol et/ou la pression d'appui, selon lequel
- on enregistre dans une mémoire non volatile (23, 33) de l'appareil de régulation (7) la valeur des signaux correspondant à la pression maximale de cylindre ($P_{max}$) de l'élément de commande (3) lorsque l'équipement est soulevé et/ou la distance au sol ($H_{bod}$) en cas d'appui horizontal de l'équipement (2) sur le sol, et
- on déduit des valeurs de correction ($P_{corr}$, $H_{corr}$) pour chaque signal de valeur de consigne respective ($P_{cons}$, $H_{cons}$) à partir de ces signaux ($P_{max}$, $H_{bod}$) et des signaux réels mesurés ($P_{reel}$, $H_{reel}$),

**caractérisé en ce que**

- l'appareil de régulation (7) comporte une boucle de régulation proportionnelle (20) qui détermine une grandeur de réglage (Y) pour l'élément de commande (3) selon la relation suivante :

$$Y = (H_{cons} - H_{reel}) * K_p 1 \qquad (1)$$

dans laquelle $H_{cons}$ = valeur de consigne de la distance, $H_{reel}$ = valeur réelle de la distance, $K_p 1$ = coefficient d'amplification proportionnel,

- on calcule une différence de pression ($P_{diff}$) entre la pression maximale ($P_{max}$) dans l'élément de commande (3) sans que l'équipement (2) soit appuyé sur le sol et la pression mesurée ($P_{reel}$) selon la relation suivante :

$$P_{diff} = (P_{max} - P_{reel}) \qquad (2)$$

- on détermine la valeur de correction ($H_{corr}$) pour la valeur de consigne ($H_{cons}$) de la distance au sol de l'équipement (2) selon la relation suivante :

$$H_{corr} = (P_{diff} - \text{zone morte}) * K_p 2 \qquad (3)$$

(zone morte = chute de pression faible tolérée), $K_p 2$ = coefficient d'amplification proportionnel, et

- on calcule la grandeur de régulation (Y) selon la relation suivante :

$$Y = ((H_{cons} + H_{corr}) - H_{reel} + Kp1 \qquad (4).$$

2. Procédé de régulation de la position d'un équipement d'une machine agricole, comprenant :

- un capteur de distance (9) qui détecte la distance entre l'équipement (2) et le sol ainsi qu'
- un capteur de pression (10) qui détecte la pression dans un élément de commande (3) notamment hydraulique ou pneumatique pour mesurer la pression produite pour la position de l'équipement (2), et
- un appareil de régulation (7) qui en prédéterminant au moins une valeur de consigne et en exploitant les signaux de sortie de capteur, actionne les éléments de commande (3) pour régler la distance au sol et/ou la pression d'appui, selon lequel
- les valeurs des signaux pour la pression maximale de cylindre ($P_{max}$) de l'élément de commande (3) lorsque l'équipement est soulevé et/ou la distance au sol ($H_{bod}$) en cas d'appui horizontal de l'équipement (2) sur le sol sont enregistrées dans une mémoire non volatile (23, 33) de l'appareil de régulation (7), et
- à partir de ces signaux ($P_{max}$, $H_{bod}$) et des signaux réels ($P_{reel}$, $H_{reel}$), on déduit les valeurs de correction ($P_{corr}$, $H_{corr}$) pour le signal de valeur de consigne respectif ($P_{cons}$, $H_{cons}$),

**caractérisé en ce que**

- l'appareil de régulation (7) comporte une boucle de régulation proportionnelle (20) qui détermine une grandeur de réglage (Y) pour l'élément de commande (3) selon la relation suivante :

$$Y = (P_{cons} - P_{reel}) * K_p 3 \qquad (5)$$

($P_{cons}$ = valeur de consigne de la pression, $P_{reel}$ = valeur réelle de la pression, $K_p 3$ = coefficient d'amplification proportionnel),

- on détermine la valeur de correction ($P_{corr}$) pour la valeur de consigne ($P_{cons}$) de la pression dans l'élément de commande (3) selon la relation suivante :

$$P_{corr} = (H_{reel} - H_{bod}) * K_p 4 \qquad (6)$$

($H_{reel}$ = distance au sol mesurée, $H_{bod}$ = distance au sol mise en mémoire, pour un appui au sol, $K_p 4$ = coefficient d'amplification proportionnel), et

- on calcule la grandeur de réglage (Y) selon la relation suivante :

$$Y = ((P_{cons} - P_{corr}) * K_p 3 \qquad (7).$$

3. Dispositif pour la mise en oeuvre du procédé selon l'une des revendications précédentes, **caractérisé en ce que** l'appareil de régulation (7) comporte un sélecteur de type de fonctionnement à l'aide duquel l'élément de commande (7) est commandé soit par une régulation de distance, soit par une régulation de pression d'appui de l'équipement (2) ou une combinaison de ces deux régulations.

4. Dispositif pour la mise en oeuvre du procédé selon l'une des revendications précédentes, **caractérisé en ce que** la machine agricole (1) est une moissonneuse batteuse dont la barre de fauche est l'équipement (2) réglable en hauteur par un vérin de levage hydraulique comme élément de commande (3).

5. Dispositif pour la mise en oeuvre du procédé selon l'une des revendications précédentes, **caractérisé en ce qu'** au moins un capteur de distance (9) est un capteur à ultra-sons.

6.  Dispositif pour la mise en oeuvre du procédé selon l'une quelconque des revendications 1 à 4, **caractérisé en ce qu'** au moins un capteur de distance (9) est un palpeur mécanique.

Fig.1

Fig.2

Fig.3